# EUROPÄISCHE PATENTSCHRIFT

(11) **EP 2 358 589 B1**
(45) Veröffentlichungstag und Bekanntmachung des Hinweises auf die Patenterteilung: **15.04.2015**
(21) Anmeldenummer: 09799337.2
(22) Anmeldetag: 17.12.2009
(51) Int. Cl.: G10K 11/168, B64C 1/06, B64C 1/40, G10K 11/16

(54) **FLUGZEUGKABINENPANEEL ZUR SCHALLREDUKTION**
AIRCRAFT CABIN PANEL FOR SOUND REDUCTION
PANNEAU DE CABINE D'AÉRONEF POUR L'ATTÉNUATION ACOUSTIQUE

(30) Priorität: 17.12.2008 DE 102008062703; 17.12.2008 US 201930 P
(43) Veröffentlichungstag der Anmeldung: 24.08.2011
(73) Patentinhaber: Airbus Operations GmbH, 21129 Hamburg (DE)
(72) Erfinder: THOMAS, Christian, 22769 Hamburg (DE); HESSELBACH, Florian, 89134 Blaustein (DE); HÖTZELDT, Stephan, 28215 Bremen (DE); MICHAELIS, Wilfried, 27721 Ritterhude (DE); SCHNEIDER, Uwe, 21635 Jork (DE); STURM, Ralph, 22869 Schenefeld (DE); BERGER, Arno, 22299 Hamburg (DE)
(74) Vertreter: Kopf, Korbinian Paul
(86) Internationale Anmeldenummer: PCT/EP2009/067457
(87) Internationale Veröffentlichungsnummer: WO 2010/070071

(56) Entgegenhaltungen:
- EP-A1- 0 747 285
- WO-A1-94/01629
- DE-A1- 3 313 001
- DE-A1- 3 720 371

## Beschreibung

Die vorliegende Erfindung befasst sich mit einem Flugzeugkabinenpaneel zur Schallreduzierung in einem Innenraum. Die Erfindung betrifft insbesondere auch ein Flugzeug mit einer Innenraumverkleidung mit schallabsorbierenden und schallreduzierenden Paneelen.

Schallreduzierende Paneele werden in Flugzeugen im Bereich der Kabinen eingesetzt, um die akustischen Eigenschaften des Kabineninnenraums zu verbessern, indem der als störend empfundene Schall mittels der Paneele reduziert wird. Mit den gestiegenen Komfortansprüchen an Räume im allgemeinen gehen auch zunehmend Ansprüche an die Aufenthaltsqualität in Flugzeugen einher, da unter anderem auch an die Raumakustik während des Flugbetriebs hohe Anforderungen gestellt werden. Für diesen Zweck ist es wünschenswert, im Innenraum von z.B. Flugzeugpassagierkabinen Paneele zur Schallabsorption einzusetzen, um die Geräuschbelastung im Kabineninneren zu minimieren. Bei den zu reduzierenden Geräuschen handelt es sich beispielsweise um die von den Triebwerken erzeugten Geräusche und auch um die durch mechanische Lüftungsanlagen hervorgerufenen Geräusche sowie nicht zuletzt auch um die von den Flugzeuginsassen selbst erzeugten Geräusche. Neben der Reduktion des eintretenden Schalls stellt allgemein die Erhöhung der Schallabsorptionsfläche eine Möglichkeit zur Minderung des Geräuschniveaus innerhalb des Flugzeuginnenraums, beispielsweise innerhalb der Flugzeugkabinen, dar. Auch trägt die Reduktion der Schallreflexionen und die Reduktion das Schalleintrags in unmittelbarer Nähe des Passagiers zu einer Verbesserung der Geräuschqualität bei. Für die erstgenannte Minderung der Schalltransmission des Triebwerks und Grenzschichtlärms in die Kabine hinein wird beispielsweise bei Passagierflugzeugen die akustische Wirksamkeit des Isolationsmaterials erhöht, die Körperschallentkopplung der Kabinenverkleidungselemente verbessert oder die Luftschalldämcriung der Verkleidungselemente optimiert. Nachteilig ist bei diesen Maßnahmen, dass sie nicht nur vielfach mit einer unerwünschten Gewichtszunahme verbunden sind, sondern auch den in der Kabine selbst erzeugten Schall nicht reduzieren können. Zur Verbesserung der akustischen Eigenschaften von Flugzeugkabinen ist es beispielsweise bekannt, den Bereich der Kabinenverkleidung für eine breitbandige schallabsorbierende Wirkung heranzuziehen. Zum Beispiel ist aus der DE 10 2005 016 653 A1 ein schallabsorbierendes Paneel bekannt, bei dem ein Sandwichpaneel akustisch transparent ausgeführt wird und auf der Paneelseite, die der Kabine abgewandt ist, ist ein breitbandig wirksamer poröser Absorber angeordnet. Die akustische Transparenz des Sandwichpaneels, das die eigentliche Kabinenverkleidung darstellt, wird dadurch erreicht, dass eine wabenförmige Kernstruktur mit akustisch transparenten Deckflächen ausgeführt ist. Der Absorber bedeutet jedoch einen erhöhten Bauraumbedarf und ein zusätzliches Gewicht. Aufgrund der Transparenz des Panels kann dessen Gewicht nicht im Sinne der Schalldämmung verwendet werden. In der DE 3720371 C2, dem nächstliegenden Stand der Technik, ist eine Leichtbauverbundplatte beschrieben, bei der ein Wabenkern zwischen zwei Deckschichten angeordnet ist. Der Wabenkern ist mit einem porösen Absorbermaterial gefüllt, und die dem Raum zugewandte Deckschicht ist akustisch transparent ausgeführt. Es hat sich jedoch gezeigt, dass das Einbringen des Absorbermaterials auch ein zusätzliches Gewicht bedeutet und einhergeht mit zusätzlichen Schritten beim Fertigungsprozess. Eine Gewichtszunahme bedeutet jedoch ökonomische und auch ökologische Nachteile beim Betrieb des Flugzeugs oder eines anderen Luftfahrzeugs. Im Zusammenhang mit den stetig steigenden Treibstoffkosten und der allgemein anerkannten Bedeutung des CO₂-Ausstoßes rückt der Aspekt des Bauteilgewichts bei der Bauteilentwicklung im Bereich der Luftfahrt an eine zentrale Stelle.

Es besteht daher ein Bedarf, ein bezogen auf Bauraumbedarf und Gewicht optimiertes Paneel für den Einsatz in Flugzeugen mit verbesserten Schallreduktionsund Schallabsorptionseigenschaften zur Verfügung zu stellen.

Erfindungsgemäß werden dafür ein Flugzeugkabinenpaneel zur Schallreduktion in einem Innenraum nach dem unabhängigen Anspruch 1 sowie ein Flugzeug mit einer innerhalb des Rumpfes ausgebildeten

Kabine mit einer Innenraumverkleidung nach dem abhängigen Anspruch 15 vorgesehen.

In einer bevorzugten Ausführungsform ist ein Flugzeugkabinenpaneel zur Schallreduzierung in einem Innenraum vorgesehen, das in wenigstens einem Bereich eine Sandwichkonstruktion mit einer Kernschicht, einer ersten Deckschicht und einer zweiten Deckschicht aufweist. Die Kernschicht besteht aus einem schallabsorbierenden offenporigen Kernmaterial. Die erste und die zweite Deckschicht sind flächig mit der Kernschicht verbunden. Die erste Deckschicht ist in Richtung der zu absorbierenden Schallwellen angeordnet und die zweite Deckschicht ist gegenüber der ersten Deckschicht angeordnet. Die erste Deckschicht ist akustisch transparent ausgebildet.

In einer bevorzugten Ausführungsform weist ein erster Bereich die Sandwichkonstruktion zur Schallabsorption in dem Innenraum des Flugzeugs auf, wobei die erste Deckschicht eine erste raumabschließende Oberfläche aufweist.

Der Vorteil des erfindungsgemäßen Paneels besteht darin, dass das offenporige Kernmaterial einerseits als poröser Absorber wirksam ist und andererseits aufgrund der flächigen Anbindung des Kernmaterials an die Deckschichten eine Sandwichstruktur mit hohen spezifischen mechanischen und statischen Eigenschaften bereitgestellt wird. Die akustische Transparenz der ersten Deckschicht, die dem zu bedämpfenden oder absorbierenden Schallfeld zugewandt ist, gewährleistet ein Eindringen des Schalls durch die Deckschicht in den Kernwerkstoff, der den Schall absorbiert. Mit anderen Worten, es wird ein Kabinenpaneel zur Verfügung gestellt, das über verbesserte Schallabsorptionseigenschaften verfügt und gleichzeitig einfach hergestellt werden kann. Dies wird beispielsweise dadurch erreicht, dass das offenporige Kernmaterial vorzugsweise als plattenförmiges Halbzeug zur Verfügung gestellt wird, wodurch die Handhabung wesentlich vereinfacht ist.

Da die erste Deckschicht und die zweite Deckschicht aufgrund der flächigen Verbindung mit der die Kernschicht eine Verbundwirkung bereitstellen, kann die Kernschicht in diesem Bereich neben den akustischen Aufgaben zusammen mit den Deckschichten auch statische Funktionen übernehmen. Dadurch kann das Paneel leichter und dünner ausgeführt werden.

Das offenporige Kernmaterial bietet den Vorteil, dass es einerseits als poröser Absorber wirksam ist und andererseits aufgrund der flächigen Anbindung des Kernmaterials an die erste Deckschicht eine mehrlagige Struktur mit hohen spezifischen mechanischen und statischen Eigenschaften bereitstellt.

Gemäß einer beispielhaften Ausführungsform der Erfindung besteht die Kernschicht aus einem druckfesten Material.

Gemäß der Erfindung besteht die Kernschicht aus einem offenporigen oder offenzelligen Schaumwerkstoff.

Gemäß einer beispielhaften Ausführungsform der Erfindung ist der offenporige Schaumwerkstoff ein Hartschaumstoff.

Die Verwendung eines Schaums als Kernwerkstoff hat den Vorteil, dass bereits bei der Herstellung des Halbzeugs die später zum Einsatz kommende Dicke der Kernschicht berücksichtigt werden kann, so dass der Kernwerkstoff, d.h. der Schaum, in Form einer Platte direkt mit der ersten und der zweiten Deckschicht verbunden werden kann.

Vorzugsweise ist das Raumgewicht des Kernmaterial so groß wie das Raumgewicht der üblicherweise verwendeten Kernwerkstoffe für Paneele.

Dadurch lassen sich Flugzeugkabinenpaneele für die Kabinenverkleidung, sogenannte Liningelemente, zur Verfügung stellen, die sich, bei ähnlichen Paneeldicken, vom Gewicht her an den heutzutage üblichen Liningbauteilen orientieren. Bei Verwendung eines Kernmaterials mit einem geringeren Raumgewicht lassen sich bei gleicher Dicke leichtere Paneele bzw. bei gleichem Gewicht und dickeren Paneelen bessere Schallabsorptionseigenschaften erreichen.

Außerdem ergeben sich durch das Kernmaterial auch gute Wärmedämmeigenschaften des Paneels, so dass die Wärmedämmung der Außenwand etwas reduziert werden kann, was einen zusätzlichen Raumgewinn und eine weitere Gewichtsreduzierung bedeutet. Dadurch kann die Kernschicht statische, akustische und thermische Aufgaben mit einem Werkstoff übernehmen.

In einem Beispiel weist der Schaumwerkstoff eine geringe Dichte auf. Beispielsweise weist der Schaumwerkstoff eine Dichte von max. 300 kg/m³ auf, z.B. eine Dichte von max. 150 kg/m³.

In einem Beispiel weist der Schaumwerkstoff eine Dichte von 30 kg/m³ bis 110 kg/m³ auf.

In einem Beispiel weist der Schaumwerkstoff eine Druckfestigkeit von ca. 200 kPa bis ca. 1500 kPa bei einer Dichte zwischen ca. 30 kg/m³ und ca. 120 kg/m³ auf.

In einem Beispiel weist der Schaumwerkstoff eine Biegesteifigkeit von 200 kPa bis ca. 2200 kPa bei einer Dichte zwischen ca. 30 kg/m³ und ca. 120 kg/m³ auf.

In einem Beispiel weist der Schaumwerkstoff eine Schub-/bzw. Scherfestigkeit von 400 kPa bis ca. 1500 kPa bei einer Dichte zwischen ca. 30 kg/m³ und ca. 120 kg/m³ auf.

In einem Beispiel weist der Schaumwerkstoff eine Zugfestigkeit von 500 kPa bis ca. 3000 kPa bei einer Dichte zwischen ca. 30 kg/m³ und ca. 120 kg/m³ auf.

Beispielsweise besteht die Kernschicht aus einem Hochleistungsthermoplast, z.B. einem amorphen Polyetherimid-Kunststoff.

In einer bevorzugten Ausführungsform bildet der erste Bereich einen kabinenseitigen Absorptionsbereich. Beispielsweise ist das Paneel ein Kabinenverkleidungspaneel.

In einer bevorzugten Ausführungsform weist das Paneel den beschriebenen Aufbau in einem Großteil seiner Fläche auf, der je nach Einsatzort innerhalb der Kabine auf dem Paneel verteilt sein kann. Dadurch lassen sich Paneele zur Verfügung stellen, die neben der akustischen Funktion z.B. auch andere Aufgaben oder Funktionen übernehmen können. Beispielsweise können Paneele in Gangbereichen im unteren Bereich an die dort zu erwartenden stärkeren mechanischen Belastungen, z.B. durch Stöße mit Gepäckstücken etc., angepasst sein. Als weiteres Beispiel sind Paneele zu nennen, die eine Öffnung für ein Kabinenfenster aufweisen.

In einer bevorzugten Ausführungsform sind Randbereiche vorgesehen und die mit der ersten und der zweiten Deckschicht flächig verbundene Kernschicht aus dem schallabsorbierenden offenporigen Kernmaterial erstreckt sich zwischen den Randbereichen.

Dadurch lassen sich Paneele zur Verfügung stellen, die zum Beispiel bereits bei der Fertigung leichter an komplizierte Randgeometrien angepasst werden können. Beispielsweise können Deckenpaneele einen relativ ebenen Bereich und stärker gekrümmte seitliche Bereiche aufweisen. Durch Anordnen des akustisch wirksamen Aufbaues in dem ebenen Bereich wird die Herstellung dieser Sandwichkonstruktion vereinfacht, wenn z.B. auf plattenförmige Halbzeuge für die Kernschicht zurückgegriffen werden kann. Die Ränder können dann einen Aufbau aufweisen, der sich für die Herstellung von gekrümmten Anschlüssen besser eignet; z.B. kann auf bekannte Randgeometrien zurückgegriffen werden. Die Paneele lassen sich dadurch unter Verwendung bekannter Anschlusskonstruktionen problemlos befestigen.

Dadurch lassen sich auch Paneele zur Verfügung stellen, die sich von ihren Rändern nicht von herkömmlichen Kabinenpaneelen unterscheiden und sich somit für eine Kombination mit bekannten Paneelen eignen, insbesondere auch für Umbaumaßnahmen oder Retrofittings.

In einer weiter bevorzugten Ausführungsform erstreckt sich die mit der ersten und der zweiten Deckschicht flächig verbundene Kernschicht aus dem schallabsorbierenden offenporigen Kernmaterial über das gesamte Paneel.

Der akustisch wirksame Aufbau über die gesamte Paneelfläche gewährleistet eine maximale akustische Wirkung. Gleichzeitig wird der Herstellungsprozess vereinfacht und damit auch die Herstellungskosten gesenkt.

Als weiterer Vorteil ist zu nennen, dass sich die Paneele dadurch auch als eine Art Halbzeug zur Verfügung stellen lassen, die sich z.B. besser an die genauen Abmessungen der konkreten Einbausituation anpassen lassen.

Unter akustischer Transparenz wird im Zusammenhang mit der vorliegenden Erfindung die Eigenschaft verstanden, den auf die Fläche auftreffenden Schall möglichst ungehindert passieren zu lassen. Die akustische Transparenz bezieht sich dabei insbesondere auf den Frequenzbereich der Sprachverständlichkeit. Für diesen wird üblicherweise ein Bereich von 500 bis 4000 Hz angegeben. Die akustische Transparenz bedeutet also, dass Schallwellen möglichst in dem gesamten genannten Frequenzbereich durchgelassen werden sollen. Nur dann ist eine breitbandige Beeinflussung der Akustik im Sinne einer Verbesserung der Sprachverständlichkeit, zu deren Kennzeichnung auch der Begriff *Speach Interference Level* verwendet wird, im Kabinenraum möglich.

Die akustische Transparenz wird, vereinfacht gesagt, von der Zusammenwirkung zwischen den verwendeten Materialien und deren Befestigung, bzw. Konstruktion bestimmt. Zu unterscheiden ist zunächst in luftdurch- und luftundurchlässige Werkstoffe. Die akustische Transparenz von luftdurchlässigen Materialien wird dabei durch deren Strömungswiderstand gekennzeichnet. Luftundurchlässige Materialien weisen nur unter bestimmten Randbedingungen eine akustische Transparenz auf. Beispielsweise kann ein dünner, leichtgewichtiger plattenförmiger luftundurchlässiger Werkstoff bei loser Aufhängung einen Frequenzbereich (nahezu) ungehindert weitergeben, indem die Platte den Luftschwingungen (nahezu) keinen Widerstand entgegensetzt und die Schallwellen die Schicht (nahezu) ungehindert passieren können. Dahingegen bietet derselbe Werkstoff in fest eingespanntem Zustand, insbesondere bei Einspannung in geringen Abständen, einen wesentlich größeren Widerstand für die auftreffenden Schallwellen. Entscheidend für die Beurteilung der akustischen Transparenz ist daher die tatsächlich erreichte Wirkung und nicht eine isolierte Betrachtung eines Materials an sich oder lediglich die Betrachtung einer bestimmten Konstruktion.

Die dem Schall zugewandte Deckschicht weist in einer bevorzugten Ausfiihrungsform erfindungsgemäß eine akustische Transparenz auch für schräg, z.B. in einem flachen Winkel auf die Platte auftreffende Schallwellen auf. Daraus ergibt sich in vorteilhafterweise eine noch bessere Absorption des Paneels, da schräg auftreffender Schall sich über eine längere Distanz in dem absorbierend wirkenden Kernmaterial ausbreiten kann. Daraus ergibt sich eine besondere Eignung für den Einsatz in Passagierkabinenbereichen, in denen in der Regel eine Vielzahl von Quellen Schall in völlig verschiedene Richtung ausstrahlen.

In einer bevorzugten Ausführungsform ist der Strömungswiderstand der ersten Deckschicht nicht größer als 1000 Ns/m³.

Bei einem solchen Strömungswiderstand ist gewährleistet, dass die dem Raum zugewandte Deckschicht das Absorptionsvermögen des Paneels nicht nachteilig beeinträchtigt. Der Strömungswiderstand bezieht sich dabei auf die gesamte Deckschicht, d.h. beispielsweise auf ein Gitterprepreg mit dem davor angeordneten Dekorelement.

Bei dem Strömungswert handelt es sich um einen Mittelwert der betrachteten Fläche, bei dem einige Bereiche im Prinzip auch dichter verschlossen sein können und andere durchlässiger. Dadurch lassen sich z.B. heterogene Oberflächen gestalten, die beispielsweise in der sichtbaren Fläche strukturiert sind. Da der Schall, wie bereist erwähnt, auch schräg auf das Paneel auftreffen kann und in dieser Richtung in den Absorber eindringen kann, kann der Kemwerkstoff beispielsweise auch dort als Absorber aktiviert werden, wo die Schalldurchlässigkeit lokal etwas geringer ist, z.B. kann der Absorber bei streifenförmig angeordneten dichteren Bereichen vollflächig absorbierend wirksam werden.

In einem Beispiel ist der Strömungswiderstand der ersten Deckschicht nicht größer als 500 Ns/m³.

Bei diesem Wert kann die Deckschicht als akustisch sehr transparent angesehen werden.

In einem Beispiel beträgt der Strömungswiderstand der ersten Deckschicht maximal 200 Ns/m³.

Unterhalb dieses Wertes ist eine Schicht nahezu völlig akustisch transparent. Weitere Unterschreitungen führen zu kaum wahrnehmbaren Verbesserungen.

Im Zusammenhang mit der akustischen Transparenz der Deckschicht ist unabhängig von dem erzielten Wert insbesondere zu beachten, dass es nicht zu einer Reflektion der hohen Frequenzen, z.B. an der Deckschichtoberfläche kommt, da diese Frequenzen damit weiterhin als akustische Last im Raum vorhanden sind und von dem Absorbermaterial nicht absorbiert werden können.

In einer bevorzugten Ausführungsform ist die erste Deckschicht mehrlagig ausgebildet.

Dadurch ist gewährleistet, dass die einzelnen von der Deckschicht zu erfüllenden Funktionen von unterschiedlichen Materialien in verschiedenen Lagen abgedeckt werden können.

In einer besonders bevorzugten Ausflihrungsforrn weist die erste Deckschicht ein erstes Gitterprepreg und eine die erste Oberfläche bildende Abdeckung auf, wobei das erste Gitterprepreg flächig mit der Kernschicht verbunden ist.

Dabei übernimmt das Gitterprepreg statische bzw. mechanische Aufgaben, indem es den dahinterliegenden Kern aufgrund der Verbundwirkung stabilisiert und so dem Paneel die für eine Kabinenverkleidung erforderliche Stabilität und Steifigkeit, insbesondere Biegesteifigkeit, verleiht. Bei dem Gitterprepreg handelt es sich beispielsweise um eine aus Hochleistungsfasern und einem Matrixmaterial aufgebaute Gitterstruktur, die in der Regel in einem Pressprozess unter Temperatur mit dem Kern verbunden wird. Die dem Raum zugewandte Abdeckung übernimmt dann die Aufgabe, das Paneel mit der Kernschicht und dem Gitterprepreg mit einer optisch hochwertigen Ansichtsseite zu versehen.

In einem Beispiel weist die erste Abdeckung als Oberflächenmaterial Leder auf.

Bei entsprechend geringer Dicke des Leders und angepasstem Perforationsmuster lassen sich damit beispielsweise Strömungswiderstandswerte von ca. 50 Ns/m³ erreichen. Leder eignet sich besonders für hochwertig ausgestatte Kabinenbereiche, wie zum Beispiel der ersten Klasse. Aufgrund der relativ strapazierbaren Oberfläche eignet sich Leder auch für stark beanspruchte Bereiche, beispielsweise im Eingangsoder Gangbereich.

In einem Beispiel weist die erste Abdeckung als Oberflächenmaterial ein Gewebe auf.

Mit einem Gewebe lässt sich einerseits bei entsprechender Ausbildung eine akustisch transparente Schicht ausbilden. Andererseits wird durch ein Gewebe eine optisch ansprechende Oberfläche geschaffen. Dabei können beispielsweise Gewebe verwendet werden, die die Unternehmensfarbe einer Luftfahrtgesellschafft aufweisen oder in sonstiger Art und Weise an das Unternehmenslayout bzw. die Corporate Identity angepasst sind. Insbesondere kann das Gewebe auch mit Logos oder auch sonstigen graphischen Gestaltungsmitteln versehen sein.

Je nach Einsatzbereich des Paneels innerhalb der Flugzeugkabine kann das Gewebe mit einer Beschichtung ausgerüstet werden, die einen selbstreinigenden Effekt aufweist, beispielsweise kann eine solche Beschichtung mit Titandioxid ausgeführt werden. Dadurch lässt sich eine Verschmutzung der Oberfläche, beispielsweise in Gangbereichen, verhindern.

In einem Beispiel ist zwischen dem Oberflächenmaterial und dem ersten Gitterprepreg ein Vlies vorgesehen.

Dadurch lässt sich das Oberflächenmaterial, bei dem es sich, vereinfacht gesagt, in erster Linie um ein Dekorelement handelt, unterfüttert. Dadurch lassen sich beispielsweise Unebenheiten im Bereich der darunter liegenden Konstruktion ausgleichen, so dass eine höhere Oberflächengenauigkeit zur Verfügung gestellt wird. Andererseits lassen sich dadurch auch unterschiedliche haptische Eigenschaften des Kabinenpaneels erreichen, was zum Beispiel bei Kabinenwänden einen hochwertigeren Eindruck beim Nutzer hervorrufen kann, beispielsweise bei seitlich neben den Sitzen angeordneten Kabinenwänden, bei denen in der Regel ein Berühren durch den Nutzer erfolgt, beispielsweise wenn er sich seitlich gegen die Wand lehnt. Eine weichere Oberfläche kann hier unter Umständen einen größeren Nutzerkomfort bedeuten und damit die Aufenthaltsqualität verbessern.

In einer weiter bevorzugten Ausführungsform ist die zweite Deckschicht akustisch transparent ausgeführt.

Bei Anordnen eines Kabinenpaneels im Bereich der Rumpfisolierung, d.h. in unmittelbarer Nähe zur Außenwand, die über eine entsprechende Isolierung verfügt, welche sowohl als Wärmeisolierung als auch als Schalldämmung vorgesehen ist, kann das absorbierende Paneel aufgrund der akustischen Transparenz der Rückseite zusammen mit der bezogen auf den Schalleintrag vom Raum her hinter dem Paneel liegenden Rumpfisolierung auch als Absorber für tiefe Frequenzen wirken.

In einer weiter bevorzugten alternativen Ausführungsform ist vorgesehen, dass die Abdeckung einerseits eine gewisse akustische Transparenz aufweist, andererseits jedoch bereits aufgrund der Struktur des Gewebes eine Beeinflussung der akustischen Wirkungsweise des Kabinenpaneels gewährleistet ist.

Dadurch lassen sich beispielsweise die Schallabsorptionseigenschaften oder auch sonstigen akustischen Eigenschaften des Paneels weiter verbessern, z.B. kann der Schall bereits durch die Abdeckung gedämpft werden.

In einer bevorzugten Ausführungsform ist die zweite Deckschicht mehrlagig ausgebildet und weist ein zweites Gitterprepreg auf, wobei das zweite Gitterprepreg flächig mit der Kernschicht verbunden ist.

Das zweite Gitterprepreg gewährleistet eine möglichst hohe Biegesteifigkeit des Paneels bei gleichzeitig maximalem Schalldurchgang durch die zweite Deckschicht.

In einer weiter bevorzugten Ausführungsform ist die zweite Deckschicht wasserundurchlässig ausgebildet.

Dadurch wird ein Eindringen von Kondenswasser in die Paneele verhindert, dessen Entstehung im Bereich zwischen der Flugzeugaußenhaut und der Kabinenwand oftmals nicht verhindert werden kann.

In einer weiter bevorzugten Ausführungsform weist die zweite Deckschicht eine dünne wasserundurchlässige Folie auf, die ein Flächengewicht von maximal 100 Gramm pro Quadratmeter aufweist.

Die wasserundurchlässige Folie verhindert das rückseitige Eindringen des bereits erwähnten Kondenswassers, das sich im Bereich der Rumpfisolierung bilden kann. Aufgrund des geringen Flächengewichts ist dennoch die akustische Transparenz bezogen auf diejenigen Frequenzen gegeben, die von der dahinterliegenden Rumpfisolierung noch absorbiert werden sollen.

In einer alternativen Ausführungsform ist die zweite Deckschicht akustisch dämmend ausgebildet, d.h. die zweite Deckschicht hat eine akustisch dämmende Wirkung.

Dadurch wird beispielsweise verhindert, dass Schall, der beispielsweise nicht vollständig durch den Absorber absorbiert wird, durch das Paneel hindurchtreten kann.

Außerdem wird verhindert, dass es zu einem Schalldurchgang des von außerhalb des Kabinenbereichs entstehenden Schalls durch die Kabinenwand hinein in die Kabine kommt. Diese Ausführungsvariante bietet sich insbesondere dort an, wo mit einem vermehrten Schalleintrag von außen her in die Kabine zu rechnen ist, beispielsweise aufgrund von Triebwerkslärm. Bei dem zu dämmenden Schall kann es sich aber auch um die beim Flugbetrieb entstehenden Geräusche aufgrund der Strömungsgrenzschicht auf der Außenhaut handeln. Da das Bauteil also nur einseitig akustisch transparent ist, verfügt es neben den Absorptionseigenschaften auch über ein Schalldämmmaß. Das Schalldämmmaß wird dabei von der Ausbildung der zweiten Deckschicht bestimmt. Da sich die zweite Deckschicht auf der der Kabine abgewandten Seite befindet, lassen sich hier Konstruktionen und Materialien verwenden, die einerseits die Verbundwirkung mit dem Kernmaterial gewährleisten und andererseits aber auf die auf eine Optimierung des Schalldämmmaßes ausgerichtet sind und bei denen die optische Wirkung nicht beachtet werden muss. Im Gegensatz zu den bekannten Wabenkernen weist das poröse Kernmaterial selbst auch ein Schalldämmmaß auf. Mit anderen Worten, lässt sich auf einfache Art und Weise ein höheres Schalldämmmaß des Bauteils erreichen. Das erfindungsgemäße Paneel führt somit insgesamt zu einer deutlichen Reduktion des Flugzeuginnengeräuschs.

Beispielsweise kann die zweite Deckschicht in einer bevorzugten Ausführungsform dafür mehrlagig ausgebildet sein und ein zweites Gitterprepreg aufweisen.

Das zweite Gitterprepreg trägt zu einer weiteren Verbesserung der statischen und mechanischen Eigenschaften des Paneels bei, indem es die Kernstruktur zusätzlich stabilisiert. Auf das zweite Gitterprepreg kann dann ein akustisch wirksames Dämmmaterial aufgebracht werden. Bei einer Ausbildung als akustisch geschlossene rückseitige Deckschicht wird diese akustische Funktion von weiteren Lagen gewährleistet, die von der Rauminnenseite aus gesehen hinter dem zweiten Gitterprepreg angeordnet sind.

In einer weiteren alternativen Ausführungsform weist die zweite Deckschicht eine zweite raumabschließende Oberfläche auf.

Dadurch wird ein Kabinenpaneel zur Verfügung gestellt, das sich als Paneel innerhalb der Kabine, beispielsweise als Kabinentrennwand eignet, da es auf beiden Seiten einem ,Kabineninnenraumbereich zugeordnet sein kann.

In einer bevorzugten Ausführungsform ist die zweite Deckschicht mehrlagig ausgebildet und weist ein zweites Gitterprepreg und eine die zweite Oberfläche bildende zweite Abdeckung auf.

Das zweite Gitterprepreg übernimmt dabei mechanische bzw. statische Aufgaben, indem es zusammen mit der Kernschicht und dem auf der anderen Seite angeordneten ersten Gitterprepreg eine biegesteife Verbundplatte bildet. Die zweite Abdeckung übernimmt die Aufgabe, ein Paneel zur Verfügung zu stellen, das auch auf der zweiten Seite eine ansprechende Oberfläche aufweist.

Vorzugsweise sind die beiden Abdeckungen, d.h. die erste Abdeckung auf der ersten Deckschichtseite und die zweite Abdeckung auf der gegenüberliegenden zweiten Deckschichtseite unterschiedlich ausgebildet, um den unterschiedlichen Raumbereichen auch eine unterschiedliche Gestaltung zur Verfügung zu stellen. Beispielsweise kann die erste Abdeckung einem Bereich Erster Klasse und die zweite Abdeckung einem Bereich Zweiter Klasse zugeordnet sein, weshalb die beiden Abdeckungen auch optisch unterschiedlich sein können. Selbstverständlich sind beide Abdeckungen dabei akustisch transparent ausgebildet.

In einem Beispiel weist die zweite Abdeckung als Oberflächenmaterial ein Gewebe auf.

In einer weiter bevorzugten Ausführungsform ist die zweite Abdeckung mehrlagig ausgebildet.

Bevorzugt ist auch eine Ausführungsform, bei der die erste Abdeckung mehrlagig ausgebildet ist.

Die Mehrlagigkeit der Abdeckung ermöglicht beispielsweise ein Unterfuttern des sichtbaren Gewebes mit einem Vliesmaterial.

In einem Beispiel ist zwischen der Abdeckung und dem Gitterprepeg ein Vlies vorgesehen.

Dadurch lassen sich beispielsweise Unebenheiten im Bereich der darunter liegenden Kernstruktur und des mit der Kernstruktur verbundenen Gitterprepregs überbrücken. Außerdem erlaubt das Vorsehen von zusätzlichen Schichten auch zusätzliche optische Effekte, beispielsweise das Anordnen von zwei übereinander liegenden Stoffen, was zu einem Moiremuster führen kann.

In einem Beispiel ist zwischen dem Oberflächenmaterial und dem Gitterprepreg ein Vlies vorgesehen.

In einer bevorzugten Ausführungsform ist zur Reduzierung des Schalleintrags in den Innenraum ein zweiter Bereich vorgesehen, der die Sandwichkonstruktion aufweist, wobei die zweite Deckschicht in dem zweiten Bereich eine raumabschließende Oberfläche aufweist und die erste Deckschicht eine rückseitige Fläche einer Kabinenverkleidung bildet.

In einer bevorzugten Ausführungsform ist der zweite Bereich in einem Randbereich des Paneels angeordnet.

Dadurch kann der rückwärtig, also von hinten bzw. außen her auf das Kabinenpaneel auftreffende Schall gezielt an den Anschlussbereichen des Paneels gedämpft werden, an denen es, beispielsweise durch offene Fugen, zu einem vermehrten Schalleintrag in die Kabine kommen kann.

In einer bevorzugten Ausführungsform ist das Paneel ein Dado-Paneel.

Mit diesem Begriff werden z.B. diejenigen Paneele einer Kabinenverkleidung bezeichnet, die seitlich an der Außenwand angeordnet sind und bei denen in der Regel am unteren Ende im Bereich des Bodenanschlusses eine Luftabsaugöffnung / Luftaustrittsöffnung vorgesehen ist.

In einer bevorzugten Ausfiihrungsform ist der Randbereich mehrschalig ausgebildet und bildet einen Hohlraum zur Luftführung einer Lüftungsanlage eines Flugzeug, wobei die erste Deckschicht des zweiten Bereichs dem Hohlraum zugewandt angeordnet ist.

Der Begriff Hohlraum bezeichnet z.B. einen kanalartigen, an wenigstens zwei Enden offenen Querschnitt, der von dem mehrschaligen Randbereich gebildet wird, zur Führung bzw. zum Durchleiten oder Durchströmen der ab- oder zuzuführenden Luft. Der Hohlraum bildet eine Durchgangsöffnung in dem Randbereich und stellt beispielsweise eine Art Kanal bzw. Kanalsegment oder Leitung bzw. Leitungssegment dar. Der Hohlraum ist beispielsweise im Querschnitt ein von zwei Wandungen gebildeter freier Querschnittsbereich, durch den die Luft hindurch strömen kann. Der Hohlraum stellt eine Kavität bzw. Aussparung dar, die auf wenigstens zwei Seiten offen ist, d.h. er hat zumindest eine erste Öffnung, durch welche die Luft in den Hohlraum eindringen und zumindest eine zweite Öffnung, aus welcher die Luft aus dem Hohlraum wieder austreten kann. Der Hohlraum oder Hohlkörper ist derart ausgebildet, dass er einen freien Strömungsquerschnitt bildet und die Luft über die Strecke des Hohlraums führen kann. Der Hohlraum bildet also eine Führung für die Luft bzw. eine Luftfiihrung oder Leitungskanal. Bezogen auf den Bereich der Kabine und den Bereich hinter dem Kabinenpaneel stellt der Hohlraum eine Passage bzw. Verbindungskanal dar zur Luftführung.

Dadurch kann ein Luftaustausch mit dem Kabineninnenraum ermöglicht werden, bei dem der Schalleintrag reduziert ist, da der Schall auf dem für die Luft offenen Weg in Richtung Kabineninnenraum durch das Kernmaterial möglichst vollständig absorbiert wird.

In einer bevorzugten Ausführungsforin ist der Hohlraum längsgerichtet und erstreckt sich mit seinen Längsseiten parallel zum Randbereich des Paneels. Zur Luftabfuhr oder Luftzufuhr ist der Hohlraum auf einer zum Randbereich hin weisenden ersten Längsseite teilweise offen.

In einer bevorzugten Ausführungsform ist der Hohlraum zur Luftzufuhr oder Luftabfuhr auf einer zweiten Längsseite, die der ersten Längsseite gegenüberliegt, wenigstens teilweise offen.

In einer bevorzugten Ausführungsform weist der Hohlraum in Durchströmungsrichtung wenigstens einen Versatz auf bildet und einen versetzten Schallweg.

Beispielsweise ist der Hohlraum im Querschnitt als Labyrinth ausgebildet.

In einer bevorzugten Ausführungsform bildet der Hohlraum einen, auf die Längsrichtung bzw. den Randebereich bezogen, durchgehenden, permanent offenen Spalt zur Luftabfuhr.

Die eigentlichen Luftabsaugöffnungen der Klimaanlage können damit hinter der Verkleidung angeordnet werden. Das Erscheinungsbild der Kabinenverkleidung wird bis auf die Ausbildung der offenen Fuge, die z.B. als Schattenfuge mit versetztem Querschnitt den Blick auf den Bereich hinter des Paneels verhindert, nicht beeinträchtigt.

In einer bevorzugten Ausführungsform ist der Hohlraum von einer Hohlraumwandung begrenzt, welche ebenfalls die Sandwichkonstruktion aufweist, wobei die erste Deckschicht jeweils dem Hohlraum zugewandt angeordnet ist.

Dadurch lässt sich eine effektive Schallabsorption zur Verfügung stellen, die sich durch Vorteile bei der Herstellung und Montage auszeichnet. Beispielsweise lässt sich der Hohlraum bei einstückiger Ausbildung des Paneels einfach herstellen, indem das Kernmaterial als Halbzeug hergestellt wird.

Ein weiterer Vorteil besteht darin, dass der erforderliche Bauraum auf ein Minimum reduziert wird, da das Material des Paneels bereits absorbierend ist. Auf zusätzlich aufzubringende Absorber kann verzichtet werden, was mehr Bauraum bzw. einen geringeren lichten Querschnitt bedeuten würde.

In einer bevorzugten Ausführungsform ist der Hohlraum als Schalldämpfer ausgebildet.

In einer bevorzugten Ausführungsform ist die erste Deckschicht des zweiten Bereichs auf der gegenüberliegenden Seite der ersten Deckschicht des ersten Bereichs angeordnet.

Dadurch lässt sich auf beiden Seiten auf das Paneel auftreffender Schall reduzieren. Beispielsweise kann so der Schall im Innenraum, der unter anderem auch von den Passagieren selbst verursacht wird, durch Absorption gedämpft werden, als auch Schall, der auf die der Kabine abgewandte Seite auftrifft, z.B. von außen eindringender Lärm der Turbinen.

In einer bevorzugten Ausführungsform sind der erste und der zweite Bereich versetzt zueinander angeordnet.

Dadurch kann der Schall im Bereich der Kopfhöhe auf der Kabineninnenseite absorbiert werden und der Schalleintrag an den unteren Rändern, und selbstverständlich auch oberen oder seitlichen Rändern über offene Fugen reduziert werden.

Vorzugsweise sind die erfindungsgemäßen Kabinenpaneele in der gleichen Dicke ausgebildet wie herkömmliche Paneele.

Dies ergibt den Vorteil, dass sich das erfindungsgemäße Paneel auch in Kombination mit üblichen Kabinenpaneelen einsetzen lässt. Darüber hinaus eignet sich das erfindungsgemäße Paneel auch für einen nachträglichen Einsatz in bereits vorhandene Strukturen, beispielsweise im Rahmen von turnusgemäß stattfindenden Umbauten der Flugzeugkabinen oder sogenannten Retrofittings.

Erfindungsgemäß ist außerdem ein Flugzeug mit einer Rumpfkonstruktion und einer innerhalb des Rumpfes ausgebildeten Kabine vorgesehen, die zumindest teilweise von einer von Paneelen gebildeten Innenraumverkleidung umschlossen ist. Dabei ist wenigstens ein Teil der Paneele als ein schallabsorbierendes Paneel nach einer der vorhergehenden Ausfiihrungsformen ausgebildet.

Dadurch wird ein Flugzeug zur Verfügung gestellt, bei dem die akustischen Innenraumverhältnisse in der Kabine dahingehend verbessert sind, dass es aufgrund der verbesserten Absorptionseigenschaften der Innenraumverkleidung zu einer Reduktion des Flugzeuginnengeräuschs kommt. Die erfindungsgemäßen Paneele gewährleisten dabei, dass es trotz Verbesserung der akustischen Eigenschaften nicht zu einer Erhöhung des Bauteilgewichts kommt, was gleichzeitig eine Erhöhung des Kraftstoffbedarfs des Flugzeugs im Betrieb bedeuten würde. Als weiterer Vorteil ist zu nennen, dass es im Vergleich zu denjenigen Paneelen, bei denen auf der Rückseite ein zusätzliches Absorberelement angeordnet ist, zu einem kleineren Bauraumbedarf kommt. Dadurch steht mehr Raum für die eigentliche Nutzung der Kabine zur Verfügung, was eine zusätzliche Zunahme des Nutzerkomforts bedeutet. Eine Zunahme der Nutzfläche bedeutet auch gleichzeitig eine bessere Ausnutzung des Flugzeugs, was wiederum ökonomisch von Vorteil ist.

Es sei daraufhingewiesen, das die vorhergehende Darstellung der Erfindung und die folgenden Beispielsbeschreibungen sowie die Ansprüche zwar von ihrem Wortlaut her auf ein Flugzeug gerichtet sind, dass jedoch im Rahmen der vorliegenden Erfindung unter Flugzeuge auch andere Luftfahrzeuge, insbesondere auch Hubschrauber verstanden werden. Die Erfindung und der Schutzbereich der Ansprüche bezieht sich daher auf Luftfahrzeuge im allgemeinen, wie zum Beispiel Flugzeuge und Hubschrauber, und nicht nur auf Flugzeuge.

Nachfolgend wird anhand der beigefügten Zeichnungen näher auf Ausführungsbeispiele der Erfindung eingegangen. Es zeigen:
- Fig. 1: einen Querschnitt durch ein Flugzeug mit einer Kabinenverkleidung mit erfindungsmäßen Paneelen;
- Fig. 2: eine schematische Darstellung der akustischen Anforderungen an ein Kabinenverkleidungspaneel in einer ersten Ausführungsform gemäß der Erfindung;
- Fig. 3: einen schematischen Schnitt durch ein erfindungsgemäßes Kabinenpaneel;
- Fig. 4: eine schematische Darstellung der akustischen Anforderungen an ein erfindungsgemäßes Flugzeugkabinenpaneel in einer zweiten Ausführungsform;
- Fig. 5: einen Schnitt durch das Paneel aus Fig. 4;
- Fig. 6: eine schematische Darstellung der akustischen Anforderungen an ein Kabinenpaneel in einer weiteren Ausführungsform;
- Fig. 7: einen schematischen Schnitt durch ein Kabinenpaneel gemäß Fig. 6;
- Fig. 8: einen weiteren Querschnitt durch ein Flugzeug mit einer Kabinenverkleidung mit erfindungsmäßen Paneelen;
- Fig. 9: einen unteren Bereich der Kabinenverkleidung nach Fig. 8 ;
- Fig. 10: einen weitere Ausführungsform eines unteren Bereich der Kabinenverkleidung nach Fig. 8; und
- Fig. 11: eine schematische Darstellung des unteren Bereichs der Kabinenverkleidung nach Fig. 10.

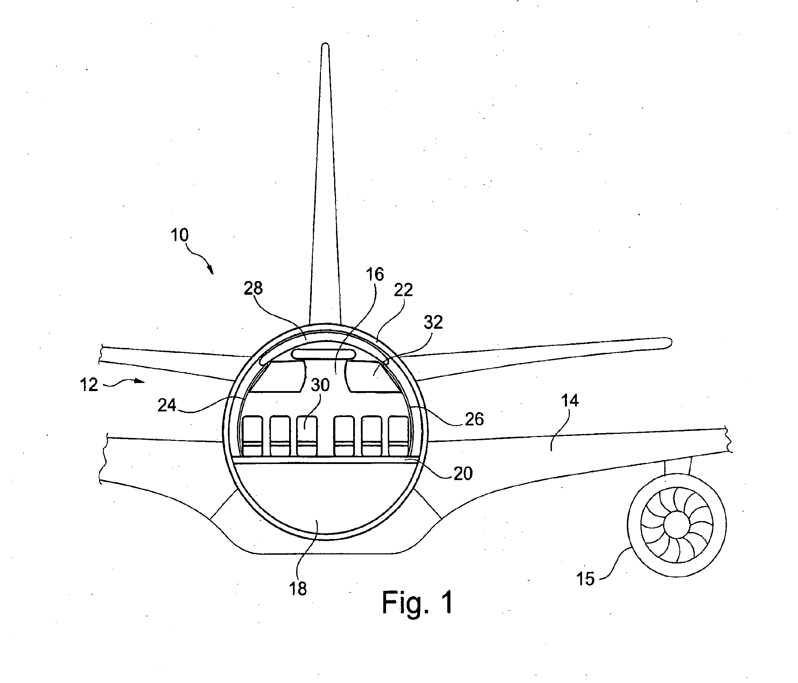

Fig. 1 zeigt ein Flugzeug 10 mit einem Flugzeugrumpf 12 und zwei seitlich daran anschließenden Flügeln 14, an denen Triebwerke 15 vorgesehen sind. Der Flugzeugrumpf 12 ist in Fig. 1 quer zu seiner Längsachse geschnitten dargestellt. Der Flugzeugrumpf 12 ist in einen oberen Kabinenbereich 16 und einen darunter angeordneten Frachtbereich 18 durch einen horizontal verlaufenden Boden 20 unterteilt. Der Flugzeugrumpf 12 weist weiter eine im wesentlichen umlaufende Flugzeugaußenhaut 22 auf, die an einer nicht näher dargestellten Flugzeugrumpfstruktur befestigt ist. Die Flugzeugrumpfstruktur besteht vereinfacht gesagt aus einer Art tragenden Struktur aus Spanten und Stringern und gewährleistet eine stabile Konstruktion zur Aufnahme der äußeren und inneren Lasten.

Im oberhalb des Bodens 20 angeordneten Kabinenbereich 16 befinden sich entlang der Außenwand 22 seitliche Kabinenverkleidungen 24, 26 sowie eine im oberen Bereich vorgesehene obere Kabinenverkleidung 28.

Die Elemente der Kabinenverkleidung 24, 26, 28 umschließen zusammen mit dem Boden 20 einen Innenraum, d.h. die Kabine. Innerhalb der Kabine sind beispielsweise Sitze 30 für die Passagiere angeordnet. Weiter sind zum Beispiel Gepäckaufnahmefächer 32 vorgesehen, die sich im wesentlichen oberhalb der Sitzreihen befinden und der Aufnahme des Handgepäcks der Passagiere dienen. Weiter sind im Kabinenbereich 16 auch diverse Versorgungsleitungen, zum Beispiel für eine Sauerstoffversorgung, elektrische Versorgung oder Lüftungsanlage, vorgesehen, die jedoch in Fig. 1 nicht näher dargestellt sind.

Die äußeren Lasten, beispielsweise Windlasten und aus Druckunterschieden resultierende Lasten, auf den Rumpfbereich werden von der Außenhaut 22 an die Tragstruktur des Flugzeugrumpfes übertragen und damit abgeleitet. Um innerhalb der Kabine geeignete Aufenthaltsbedingungen zur Verfügung zu stellen, ist in der Außenwandkonstruktion auch eine Wärmedämmung vorgesehen. Außerdem ist die Außenwandkonstruktion möglichst schalldämmend ausgebildet, um einen Lärmeintrag von den Turbinen 15 in die Kabine 16 hinein auf ein Minimum zu beschränken.

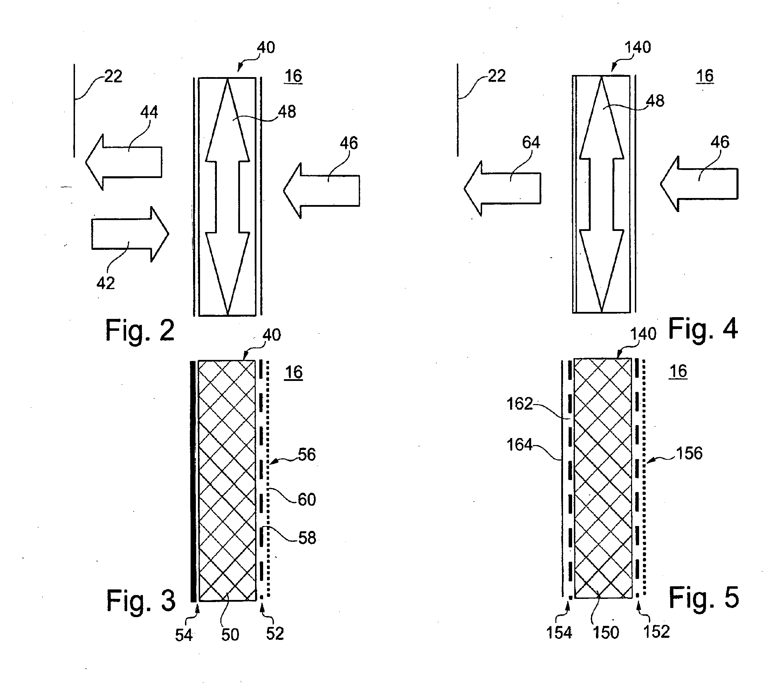

Neben der raumabschließenden Funktion der Kabinenverkleidungselemente 24, 26, 28 werden diese erfindungsgemäß auch zur Beeinflussung der akustischen Verhältnisse innerhalb der Kabine 16 herangezogen. Dazu sind die Kabinenpaneele 24, 26, 28 wenigstens teilweise schallabsorbierend ausgestaltet, was anhand der Figuren 2 und 3 nachfolgend näher erläutert wird.

In Fig. 2 sind die akustischen Zusammenhänge für ein erstes Ausführungsbeispiel einer erfindungsgemäßen Kabinenverkleidung schematisch dargestellt. Wie bereits im Zusammenhang mit Fig. 1 dargestellt, wird beispielsweise bei Passagierflugzeugen üblicherweise innerhalb der Rumpfkonstruktion eines Flugzeugs eine Kabinenraumverkleidung angeordnet, die in der Regel aus mehreren Kabinenpaneelen 40 besteht, welche zur Schaffung eines möglichst großen Kabinenraums meist in unmittelbarer Nähe zur Außenhaut 22 des Flugzeugs angeordnet sind, d.h. die Paneele 40 befinden sich zwischen dem eigentlichen Kabinenraum 16 und der Außenhaut 22. Während des Flugbetriebs kommt es trotz Isolationsmaterials im Bereich der Außenhaut 22 zu einem Schalleintritt 42 durch die Außenhaut in den Kabinenbereich hinein aufgrund beispielsweise von Grenzschichtlärm und auch dem von den Turbinen 15 erzeugten Geräuschpegel. Gleichzeitig kommt es innerhalb der Kabine beispielsweise durch Lüftungsanlagen und nicht zuletzt auch durch die in der Kabine anwesenden Personen zu einer Lärmentwicklung, die von dem Bereich der Kabine 16 her auf das Paneel 40 wirkt. Um möglichst angenehme Aufenthaltsbedingungen innerhalb der Kabine zu schaffen, haben die erfindungsgemäßen Paneele in einer ersten Ausführungsform, die in Fig. 2 und Fig. 3 dargestellt ist, die Aufgabe, den von außen einfallenden Lärm möglichst zu reflektieren 44 bzw. zu dämmen, so dass der von außen einfallende Lärm nicht auch noch im Innenraum anfällt. Weiter kann der Schallpegel im Kabineninnenraum dadurch reduziert werden, dass ein möglichst großer Anteil des einfallenden Lärms, der in Fig. 2 mit einem Pfeil mit dem Bezugszeichen 46 dargestellt ist, von dem erfindungsgemäßen Kabinenpaneel 40 absorbiert wird, was mit einem weiteren Pfeil mit dem Bezugszeichen 48 angedeutet ist.

In Fig. 3 ist das Flugzeugkabinenpaneel 40 in einer ersten Ausführungsform gezeigt. Das Paneel 40 weist in wenigstens einem Bereich eine Sandwichkonstruktion mit einer Kernschicht 50, einer ersten Deckschicht 52 und einer zweiten Deckschicht 54 auf, wobei letztere gegenüber der ersten Deckschicht 52 angeordnet ist.

Gemäß der dargestellten beispielhaften Ausführungsform die Kernschicht aus einem druckfesten, offenporigen oder offenzelligen Schaumwerkstoff, wozu sich insbesondere ein Hartschaumstoff eignet.

Die Kernschicht weist beispielsweise eine geringe Dichte von max. 300 kg/m³ auf, vorzugsweise von max. 150 kg/m³. Außerdem weist der Schaumwerkstoff eine Druckfestigkeit von ca. 200 kPa bis ca. 1500 kPa bei einer Dichte zwischen ca. 30 kg/m³ und ca. 120 kg/m³ auf und eine Biegesteifigkeit von 200 kPa bis ca. 2200 kPa bei einer Dichte zwischen ca. 30 kg/m³ und ca. 120 kg/m³. Die Schub-/bzw. Scherfestigkeit beläuft sich beispielsweise auf einen Bereich von 400 kPa bis ca. 1500 kPa bei einer Dichte zwischen ca. 30 kg/m³ und ca. 120 kg/m³. Weiter weist der Kernwerkstoff der beispielhaften Ausführungsform eine Zugfestigkeit von 500 kPa bis ca. 3000 kPa bei einer Dichte zwischen ca. 30 kg/m³ und ca. 120 kg/m³ auf.

Beispielsweise besteht die Kernschicht aus einem Hochleistungsthermoplast, z.B. einem amorphen Polyetherimid-Kunststoff.

In dem in Fig. 3 gezeigten Beispiel ist der wenigstens eine Bereich als ein erster Bereich 55 ausgebildet, der zur Schallabsorption in dem Innenraum die Sandwichkonstruktion aufweist, wobei die erste Deckschicht 52 eine erste raumabschließende Oberfläche 56 aufweist.

Die Kernschicht 50 besteht aus einem schallabsorbierenden offenporigen Kernmaterial. Damit das Kernmaterial der Kernschicht 50 akustisch wirksam sein kann, ist die erste Deckschicht 52 transparent ausgebildet, d.h. der von dem Kabinenbereich 16 herkommende, auf das Paneel 40 auftreffende Schall 46 kann die erste Deckschicht 52 möglichst ungehindert passieren, so dass der Schall in der Folge auf das Kernmaterial auftrifft und in dieses eindringt, wobei der Schall aufgrund der schallabsorbierenden offenporigen Struktur dort dann absorbiert wird.

Um ein Paneel mit einer ausreichenden Biegesteifigkeit zur Verfügung zu stellen, das sich für den Einsatz als Kabinenverkleidungselement eignet, bilden die erste Deckschicht 52 und die zweite Deckschicht 54 zusammen mit der Kernschicht 50 eine Sandwichkonstruktion, wobei die Verbundwirkung dadurch erreicht wird, dass die erste und die zweite Deckschicht 52, 54 flächig mit der Kernschicht 50 verbunden sind.

Um die akustische Transparenz der ersten Deckschicht zu ermöglichen und um eine möglichst hochwertige Oberfläche des Paneels zur Verfügung zu stellen, ist in der dargestellten Ausführungsform die erste Deckschicht 52 mehrlagig ausgebildet. Dabei ist ein erstes Gitterprepreg 58 vorgesehen, das flächig mit der Kernschicht 50 verbunden ist. Zum Raum hin ist auf dem Gitterprepreg 58 eine erste Abdeckung 60 vorgesehen, welche die erste Oberfläche, d.h. die raumabschließende Oberfläche 56 bildet. Beispielsweise weist die erste Abdeckung 60 ein Gewebe auf.

Weiter kann die erste Abdeckung auch mehrlagig ausgebildet sein. Dazu kann beispielsweise zwischen einem das Oberflächenmaterial darstellenden Gewebe 60 und dem ersten Gitterprepreg 58 ein Vlies vorgesehen sein, was in der Fig. 3 jedoch nicht näher dargestellt ist. Mit dem Vlies können sowohl Unebenheiten der tragenden Unterkonstruktion in Form des Sandwiches ausgeglichen werden, um eine möglichst hochwertige und optisch ansprechende Oberfläche des Paneels zu erhalten, und außerdem auch hochwertigere Oberflächen zur Verfügung gestellt werden, die sich durch eine angenehme oder besondere Haptik auszeichnen.

Die zweite Deckschicht 54 ist akustisch geschlossen ausgebildet, um ein Eindringen des von außen einfallenden Lärms in die Kabine zu verhindern. Dabei kann einerseits eine schalldämmende Wirkung das Eindringen des Lärms verhindern, und andererseits kann auch eine Lärmreflektion an der zweiten Deckschicht 54 erfolgen, was in Fig. 2 mit dem Pfeil mit Bezugszeichen 44 dargestellt ist. Um ein Eindringen von Feuchtigkeit in Form von Kondenswasser zu verhindern, das sich im Bereich der Außenhaut 22 in der Regel nicht vollständig vermeiden lässt, ist die zweite Deckschicht 54 außerdem wasserdicht ausgebildet, so dass das Absorbermaterial nicht von Kondenswasser durchfeuchtet werden kann, was dessen Absorptionseigenschaften deutlich reduzieren würde.

In einer weiteren Ausführungsform wird in Fig. 5 ein Kabinenpaneel 140 gezeigt, das der in Fig. 4 schematisch dargestellten akustischen Wirkungsweise entspricht. Im Bereich der Triebwerksentwicklung ist man derzeit bemüht, leisere Triebwerke zur Verfügung zu stellen. Im Zusammenhang mit verbesserten akustischen Dämmeigenschaften der Außenhaut, beispielsweise aufgrund der Verwendung von neuen Materialien, kommt es teilweise zu einem geringen Anteil an von außen einfallenden Lärm. Im Verhältnis spielt dann der von der Kabinenseite 16 her auf die Kabinenverkleidung einfallende Lärm, mit dem Bezugszeichen 46 dargestellt, die Hauptrolle bezüglich des Kabinenpaneels 140. Das Kabinenpaneel 140 übernimmt dabei ähnlich wie das Kabinenpaneel 40 aus Fig. 2 und Fig. 3 die Funktion, den vom Innenraum her einfallenden Lärm zu absorbieren, siehe Pfeil 48. Um eine zusätzliche Absorption des Kabinenlärms zu ermöglichen, beispielsweise aufgrund von tieffrequentigen Vibrationen der Flugzeugstruktur, die sich über die strukturellen Elemente auch auf den Innenraum auswirken, wird die im Bereich der Außenhaut vorgesehene Isolation zur weiteren Absorption herangezogen, d.h. ein Teil des einfallenden Lärms 46 durchdringt das Paneel 140 und tritt aus dem Paneel 140 aus, was mit dem Pfeil mit Bezugszeichen 64 angedeutet ist. Dieser Lärmanteil wird dann von der nicht dargestellten Isolierung der Außenhaut 22 absorbiert.

In Fig. 5 ist das Paneel 140 gezeigt, bei dem es sich ebenfalls um eine Sandwichkonstruktion handelt, die eine Kernschicht 150, eine erste Deckschicht 152 und eine zweite Deckschicht 154 aufweist, wobei die zweite Deckschicht gegenüber der ersten Deckschicht angeordnet ist und die erste Deckschicht eine raumabschließende Oberfläche 156 aufweist. Die Kernschicht 150 besteht aus einem schallabsorbierenden offenporigen Kernmaterial, und die beiden Deckschichten 152, 154 sind mit der Kernschicht flächig verbunden.

Die erste Deckschicht 152 ist analog zu der Deckschicht 52 aus Fig. 3 ausgeführt, d.h. die erste Deckschicht 152 ist auch in diesem Ausführungsbeispiel akustisch transparent ausgebildet, um ein Eindringen des Schalls in das Absorbermaterial zu gewährleisten.

Der Unterschied besteht jedoch in der Ausbildung der zweiten Deckschicht 154, die in dem Beispiel aus Fig. 4 und Fig. 5 ebenfalls akustisch transparent ist.

Um ein Eindringen des Schalls in die Kernschicht zu gewährleisten, ist die erste Deckschicht 52 so konstruiert, dass der Strömungswiderstand der akustisch transparenten Deckschicht nicht größer als 1000 Ns/m³ ist. Dabei bezieht sich der Wert auf den Strömungswiderstand der gesamten ersten Deckschicht 52, d.h. in dem gezeigten Beispiel bezogen auf das erste Gitterprepreg 58 in Zusammenhang mit dem Oberflächenmaterial 60.

Dazu weist das Paneel 140 des zweiten Ausführungsbeispiels in Fig. 4 und Fig. 5 ein zweites Gitterprepreg 162. auf, das flächig mit der Kernschicht 150 verbunden ist. Weiter ist auf der Rückseite des Gitterprepregs, d.h. in Fig. 5 auf der linken Seite des Gitterprepregs 162 eine wasserundurchlässige Folie 164 vorgesehen, die ein Flächengewicht von maximal 100 Gramm pro Quadratmeter aufweist. Um eine akustische Transparenz der zweiten Deckschicht 154 zu gewährleisten, liegt die Folie 164 jedoch nicht straff auf dem Gitterprepreg 162 auf, sondern ist nur lose, vorzugsweise an den Rändern des Paneels, gehalten, da die Folie lediglich die Aufgabe übernimmt, ein Eindringen von Kondenswasser von der Rückseite des Paneels, d.h. von dem Bereich des Zwischenraums zwischen dem Kabinenpaneel und der Außenhaut her, zu verhindern. Durch diese Ausbildung der zweiten Deckschicht 154 wird gewährleistet, dass der Schallanteil mit tiefen Frequenzen durch die zweite Deckschicht hindurch treten kann, um von der hinter dem Paneel liegenden Rumpfisolierung im Bereich der Außenhaut 22 absorbiert zu werden.

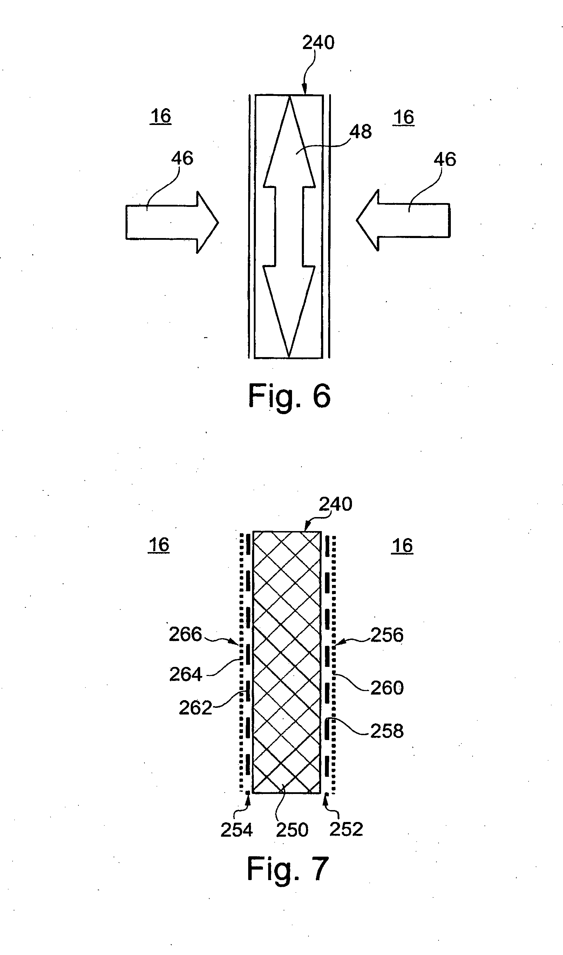

In einer weiteren Ausführungsform ist ein Kabinenpaneel 240 beispielsweise als Trennwand innerhalb der Kabine 16 vorgesehen. Die akustischen Anforderungen an eine Kabinentrennwand sind in Fig. 6 dargestellt. Hier kommt es auf beiden Seiten des Paneels 240 zu einem einfallenden Lärm 46. Um das Geräuschniveau innerhalb der Kabine 16 zu reduzieren, erfolgt auch bei der in Fig. 6 und Fig. 7 dargestellten Ausführungsform eine Schallabsorption 48 innerhalb des Paneels 240.

Das Paneel 240 weist wie die beiden vorhergehend beschriebenen Ausführungsformen eines erfindungsgemäßen Paneels eine Kernschicht 250, eine erste Deckschicht 252 und eine zweite Deckschicht 254 auf, wobei die zweite Deckschicht 254 gegenüber der ersten Deckschicht 252 angeordnet ist. Die erste Deckschicht 252 weist eine erste raumabschließende Oberfläche 256 auf. Die erste Deckschicht 252 ist analog zu den ersten Deckschichten 52 und 152 aus Fig. 3 und Fig. 5 aufgebaut, d.h. sie weist ein erstes Gitterprepreg 258 auf, auf dem eine erste Abdeckung 260 als Oberflächenmaterial angeordnet ist, wobei hier beispielsweise ein Gewebe vorgesehen sein kann.

Die zweite Deckschicht 254 ist ebenfalls mehrlagig ausgebildet und weist ein zweites Gitterprepreg 262 auf. Weiter ist vorgesehen, dass die zweite Deckschicht 254 eine zweite Abdeckung 264 aufweist, die eine zweite raumabschließende Oberfläche 266 bildet. Bei der zweiten Abdeckung 264 kann es sich beispielsweise um ein Gewebe handeln. Um ein Eindringen des Schalls 46 durch die erste Deckschicht 252 und die zweite Deckschicht 254 zu gewährleisten, sind beide Deckschichten 252, 254 akustisch transparent ausgebildet, wozu sie beispielsweise einen Strömungswiderstand aufweisen, der jeweils nicht größer als 1000 Ns/m³ ist.

Die Kernschicht 250 besteht aus einem schallabsorbierenden offenporigen Kernmaterial, so dass es beim Eintreten des Schalls 46 in die Kernschicht zu einer Absorption 48 des Schalls kommt.

Die erforderliche Biegesteifigkeit des Paneels 240 wird dadurch erreicht, dass die erste Deckschicht 252 und die zweite Deckschicht 254 flächig mit der Kernschicht 250 verbunden sind, wozu die beiden Gitterprepregs 258, 262 jeweils flächig mit der Kernschicht verbunden sind, d.h. das Gitterprepreg ist entlang seiner Gitterlinien flächig mit der Kernschicht 250 verbunden und führt so zu einer Verbundwirkung der drei Schichten.

Je nach Einsatzbereich des Paneels 40, 140, 240 innerhalb der Flugzeugkabine kann das Gewebe auf der Vorderseite mit einer Beschichtung ausgerüstet werden, die einen selbstreinigenden Effekt aufweist, beispielsweise kann eine solche Beschichtung mit Titandioxid ausgeführt werden.

Die beschriebenen Ausführungsformen der Paneele 40, 140, 240 beziehen sich auf den Aufbau in wenigstens einem Bereich des Paneels.

Bevorzugt weisen die Paneele 40, 140, 240 den jeweils beschriebenen Aufbau im Bereich ihrer Fläche auf und sind nur an ihren Rändern, beispielsweise umlaufend, unterschiedlich ausgebildet. Erfindungsgemäß können die Paneele beispielsweise an den Rändern andere Aufbauten aufweisen, um zum Beispiel an komplizierte Randgeometrien leichter anpassbar zu sein oder um speziellen Anforderungen an den konstruktiven Anschluss der Paneele einfacher gerecht zu werden.

Besonders bevorzugt sind Paneele 40,140,240, bei denen der beschriebene Aufbau über die ganze Paneelfläche inklusive der Ränder vorgesehen ist.

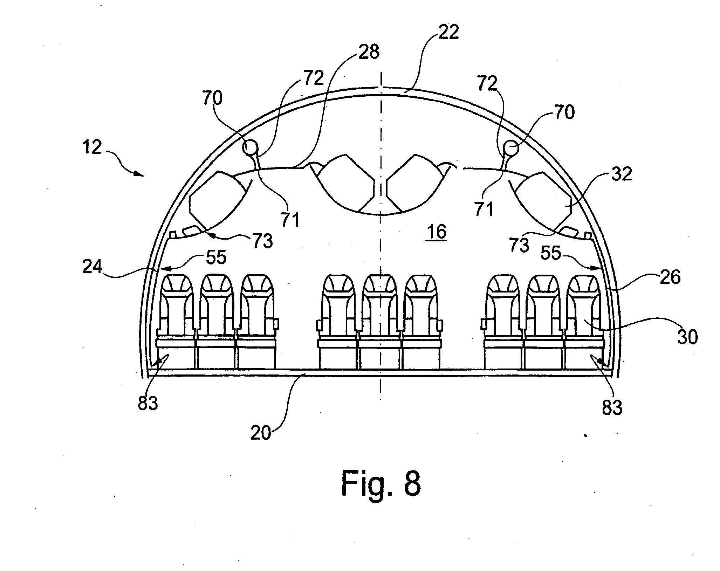

Fig. 8 zeigt eine weitere Darstellung eines Querschnitts durch einen Flugzeugrumpf. In Ergänzung zu den bereits beschriebenen seitlichen Kabinenverkleidungen 24, 26 sowie der im oberen Bereich vorgesehenen oberen Kabinenverkleidung 28 entlang der Außenwand 22 des Flugzeugrumpfs, sind auch Komponenten der bereits erwähnten Lüftungsanlage dargestellt. So befinden sich beispielsweise im oberen Bereich hinter den Kabinenverkleidungen 28 Luftführungen 70 zum Zuführten von Zuluft an die Kabine, wobei die zugeführte Luft von einer nicht weiter gezeigten Luftaufbereitungseinheit zur Verfügung gestellt wird. Das Einblasen der Zuluft erfolgt über obere Luftauslassöffnungen 71, die über Zweigleitungen 72 mit den Luftführungen 70 verbunden sind. Außerdem sind zum Zuführen von Zuluft in unmittelbarerer Nähe der Passagiere seitliche Luftauslassöffnungen 73 vorgesehen, die ebenfalls mit den Luftführungen 70 verbunden sind.

Das Absaugen oder Abführen der Kabinenluft erfolgt unter anderem im unteren Bereich der seitlichen Kabinenverkleidungen 24, 26. Dort wird die Luft abgeführt und in der Regel zumindest teilweise wieder der Luftaufbereitungseinheit zugeführt.

Zum Absaugen sind hinter den Kabinenverkleidungen 24, 26 entsprechende Luftführungen vorgesehen, die jedoch nicht näher gezeigt sind. Damit die Luft von der Kabine zu diesen Luftführungen gelangen kann, ist ein Spalt zwischen den Kabinenverkleidungen 24, 26 und dem Boden 20 vorgesehen.

Neben der Funktion, eine Luftabsaugung der im Deckenbereich zugeführten Luft zu gewährleisten, kann der Spalt auch dazu dienen, im Falle eines plötzlichen Druckabfalls im Flugzeugrumpf einen Luftaustausch zwischen der Kabine und dem übrigen Luftvolumen innerhalb des Flugzeugs zu gewährleisten, wofür hier auch zusätzliche Klappen verwendet werden können, die erst ab einer bestimmten Druckdifferenz öffnen und sonst akustisch verschlossen sind.

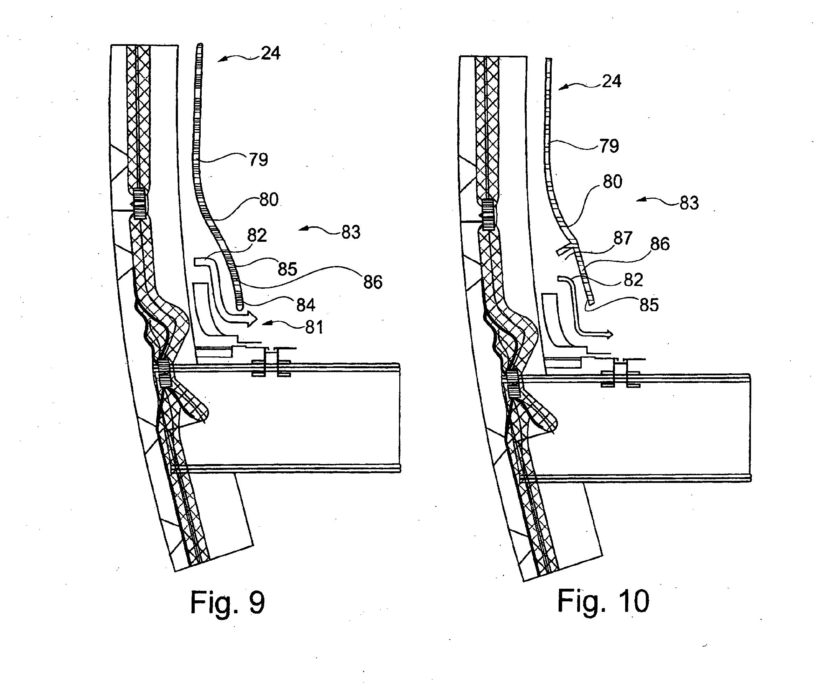

Der für den Luftaustausch der Klimaanlage erforderliche Luftspalt ist jedoch permanent offen, was anhand Fig. 9 und 10 näher beschrieben werden soll.

Wie in Fig. 9 zu sehen ist, weist ein Flugzugkabinenpaneel 79, z.B. der Kabinenverkleidung 24, am unteren Ende im Schnitt einen leichten Vorsprung 80 auf, so dass ein offener Spalt 81 ausgebildet ist, durch den ein Luftaustausch zwischen Kabinenbereich und dem Bereich hinter der Kabinenverkleidung 24 möglich ist. Gleichzeitig kann jedoch der vom Rumpf abgestrahlte Lärm aus dem Bereich hinter der Kabinenverkleidung 24 ungehindert in den Kabinenbereich eindringen, was durch einen Pfeil 82 angedeutet ist.

Um diesen Schalleintrag zu reduzieren, weist die erfindungsgemäße Kabinenverkleidung 24 ein Paneel auf, bei dem ein zweiter Bereich 83 ausgebildet ist, der die bereits erwähnte Sandwichkonstruktion aufweist, wobei der zweite Bereich in einem Randbereich des Paneels angeordnet ist.

In dem zweiten Bereich 83 weist eine zweite Deckschicht 84 eine raumabschließende Oberfläche auf und eine erste Deckschicht 85 bildet eine rückseitige Fläche der Kabinenverkleidung. Die erste und die zweite Deckschicht sind flächig mit einer Kernschicht 86 verbunden.

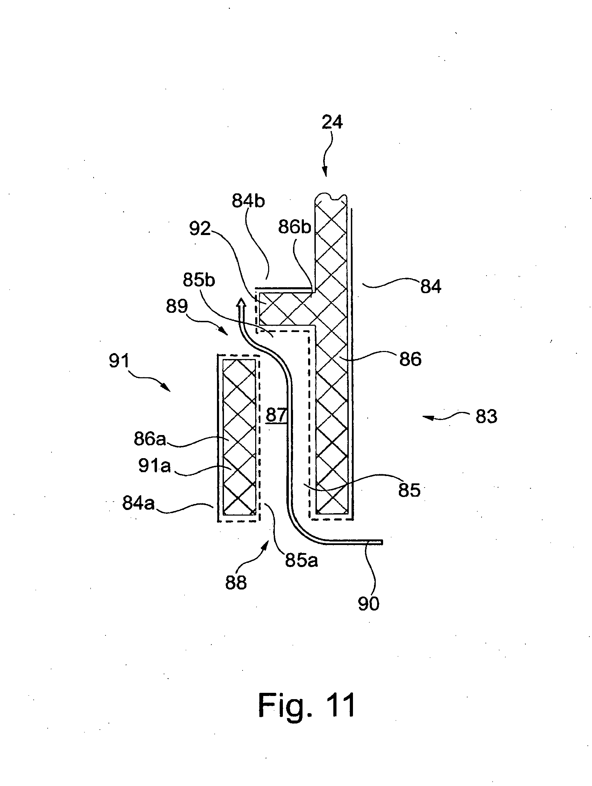

In Fig. 10 und Fig. 11 ist eine weitere Ausführungsform des erfindungsgemäßen Paneels gezeigt, bei dem ein in der Einbausituation unterer Randbereich mehrschalig ausgebildet ist und einen Hohlraum 87 zur Luftführung bzw. Luftdurchführung, einer Lüftungsanlage eines Flugzeugs bildet.

Der Hohlraum 87 bildet einen von Wandungen gebildeten freien Querschnittsbereich bzw. freien Strömungsquerschnitt, der zur Führung bzw. zum Durchleiten oder Durchströmen der ab- oder zuzuführenden Luft eine kanalartige Durchgangsöffnung in dem Randbereich des Paneels bildet. Der Hohlraum 87 ist an wenigstens zwei Bereichen offen; dazu hat der schematisch im Schnitt dargestellte Hohlraum 87 zumindest eine erste Öffnung, durch welche die Luft in den Hohlraum eindringen und zumindest eine zweite Öffnung, aus welcher die Luft aus dem Hohlraum wieder austreten kann.

Wie zu sehen ist, ist die erste Deckschicht 85 des zweiten Bereichs 83 dem Hohlraum 87 zugewandt angeordnet.

Der in Fig. 11 im Querschnitt gezeigte Hohlraum 87 ist beispielsweise längsgerichtet und erstreckt sich mit seinen Längsseiten parallel zum Randbereich des Paneels der Kabinenverkleidung 24. Weiter ist der Hohlraum auf einer zum Randbereich hin weisenden ersten Längsseite 88 und auf einer dazu gegenüberliegenden zweiten Längsseite 89 wenigstens teilweise offen. Die beiden Öffnungsbereiche an den Längsseiten ermöglichen ein Durchströmen des Hohlraums in Querrichtung, bezogen auf sein längsgerichtetes Gesamtvolumen.

Um einen versetzten Schallweg zu bilden, weist der Hohlraum 87 in Durchströmungsrichtung, angedeutet mit einem Pfeil 90, einen Versatz auf.

Gemäß einer weiteren Ausführungsform, die jedoch nicht näher gezeigt ist, ist der Schallweg als Labyrinth ausgebildet.

In einer weiteren Ausführungsform, ist der Hohlraum 87 von einer Hohlraumwandung 91 begrenzt, welche die Sandwichkonstruktion aufweist, wobei jeweils die erste Deckschicht 85 dem Hohlraum 87 zugewandt angeordnet ist.

Beispielsweise wird der Hohlraum 87 auf einer Seite durch ein erstes Wandungssegment 91 a begrenzt, das den erfindungsgemäßen Sandwichaufbau mit einer Kernschicht 86a, einer ersten Deckschicht 85a und einer zweiten Deckschicht 84a aufweist. Die erste Deckschicht 85a und die zweite Deckschicht 84a sind flächig mit der Kernschicht 86a verbunden. Weiter ist ein Vorsprung als Versatz 92 im Schallweg vorgesehen, der ebenfalls den erfindungsgemäßen Sandwichaufbau aufweist, d.h. eine Kernschicht 86b, eine erste Deckschicht 85b und eine zweite Deckschicht 84b. Die erste Deckschicht 85b und die zweite Deckschicht 84b sind auch hier flächig mit der Kernschicht 86b verbunden.

Gemäß einer weiteren Ausführungsform ist eine Kombination der verschiedenen Ausführungsformen des vorstehend beschriebenen zweiten Bereichs 83 mit einer oder mehreren der verschiedenen Ausführungsform des ersten Bereichs 55 in einem Paneel vorgesehen, was in Fig. 8 durch die Bezugszeichen 55 und 83 angedeutet, jedoch nicht näher gezeigt ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Flugzeugkabinenpaneel (40; 140; 240; 79) zur Schallreduzierung in einem Innenraum, das in wenigstens einem Bereich eine Sandwichkonstruktion aufweist mit:
- einer Kernschicht (50; 150; 250; 86);
- einer ersten Deckschicht (52; 152; 252; 85); und
- einer zweiten Deckschicht (54; 154; 254; 84);
wobei die Kernschicht (50; 150; 250; 86) aus einem schallabsorbierenden offenporigen Kernmaterial besteht;
wobei die erste und die zweite Deckschicht flächig mit der Kernschicht (50; 150; 250; 86) verbunden sind;
wobei die erste Deckschicht (52; 152; 252; 85) in Richtung der zu absorbierenden Schallwellen angeordnet ist und wobei die zweite Deckschicht (54; 154; 254; 84) gegenüber der ersten Deckschicht (52; 152; 152; 85) angeordnet ist;
wobei die erste Deckschicht (52; 152; 152; 85) akustisch transparent ausgebildet ist;
**dadurch gekennzeichnet, dass** die Kernschicht aus einem offenporigen oder offenzelligen Schaumwerkstoff besteht.

2. Flugzeugkabinenpaneel nach Anspruch 1, bei dem zur Schallabsorption in dem Innenraum ein erster Bereich (55) die Sandwichkonstruktion aufweist, wobei die erste Deckschicht (52; 152; 252) eine erste raumabschließende Oberfläche (56; 156; 256) aufweist.

3. Paneel nach Anspruch 2, bei dem die zweite Deckschicht (254) eine zweite raumabschließende Oberfläche (266) aufweist.

4. Paneel nach einem der vorhergehenden Ansprüche, bei dem sich die mit der ersten und der zweiten Deckschicht flächig verbundene Kernschicht (50; 150; 250; 86) aus dem schallabsorbierenden offenporigen Kernmaterial über das gesamte Paneel erstreckt oder bei dem Randbereiche vorgesehen sind und sich die mit der ersten und der zweiten Deckschicht flächig verbundene Kernschicht (50; 150; 250) aus dem schallabsorbierenden offenporigen Kernmaterial zwischen den Randbereichen erstreckt.

5. Paneel nach einem der vorhergehenden Ansprüche, bei dem die erste Deckschicht (52; 152; 252) mehrlagig ausgebildet ist und ein erstes Gitterprepreg (58; 158; 258) und eine die erste Oberfläche (56; 156; 256) bildende erste Abdeckung (60; 160; 260) aufweist; und wobei das erste Gitterprepreg (58; 158; 258) flächig mit der Kernschicht (50; 150; 250) verbunden ist; und oder bei dem die zweite Deckschicht (254) mehrlagig ausgebildet ist und ein zweites Gitterprepreg (262) und eine die zweite Oberfläche (266) bildende zweite Abdeckung (264) aufweist.

6. Paneel nach einem der vorhergehenden Ansprüche, bei dem die zweite Deckschicht (154; 254) akustisch transparent oder akustisch dämmend ausgebildet ist.

7. Paneel nach einem der vorhergehenden Ansprüche, bei dem der Strömungswiderstand der akustisch transparenten Deckschichten (52; 152, 154; 252, 254) jeweils nicht größer als 1000 Ns/m³ ist.

8. Paneel nach einem der vorhergehenden Ansprüche, bei dem die zweite Deckschicht (154; 254) mehrlagig ausgebildet ist und ein zweites Gitterprepreg (162; 262) aufweist; und wobei das zweite Gitterprepreg (162; 262) flächig mit der Kernschicht (150; 250) verbunden ist.

9. Paneel nach Anspruch 8, bei dem die zweite Deckschicht (154) eine dünne wasserundurchlässige Folie (164) aufweist, die ein Flächengewicht von maximal 100g/m² aufweist.

10. Paneel nach einem der vorhergehenden Ansprüche, bei dem zur Reduzierung des Schalleintrags in den Innenraum ein zweiter Bereich (83) vorgesehen ist, der die Sandwichkonstruktion aufweist; wobei in dem zweiten Bereich (83) die zweite Deckschicht (84) eine raumabschließende Oberfläche aufweist und die erste Deckschicht (85) eine rückseitige Fläche einer Kabinenverkleidung (24, 26) bildet.

11. Paneel nach Anspruch10, bei dem der zweite Bereich (83) in einem Randbereich des Paneels angeordnet ist; und wobei der Randbereich mehrschalig ausgebildet ist und einen Hohlraum (87) zur Luftführung einer Lüftungsanlage eines Flugzeugs bildet; wobei die erste Deckschicht (85) des zweiten Bereichs (83) dem Hohlraum (87) zugewandt angeordnet ist.

12. Paneel nach einem der Ansprüche 10 bis 11, bei dem der Hohlraum (87) längsgerichtet ist und sich mit seinen Längsseiten parallel zum Randbereich des Paneels erstreckt; wobei der Hohlraum (87) auf einer zum Randbereich hin weisenden ersten Längsseite (88) teilweise offen ist zur Luftabfuhr oder Luftzufuhr.

13. Paneel nach einem der Ansprüche 10 bis 12, bei dem der Hohlraum (87) von einer Hohlraumwandung (91) begrenzt ist, welche die Sandwichkonstruktion aufweist, wobei die erste Deckschicht jeweils dem Hohlraum (87) zugewandt angeordnet ist.

14. Paneel nach einem der Ansprüche 10 bis 13, bei dem die erste Deckschicht des zweiten Bereichs (83) auf der gegenüberliegenden Seite der ersten Deckschicht des ersten Bereichs (55) angeordnet ist.

15. Flugzeug (10) mit einer Rumpfkonstruktion und einer innerhalb des Rumpfes (12) ausgebildeten Kabine (16), die zumindest teilweise von einer von Paneelen (24, 26, 28) gebildeten Innenraumverkleidung umschlossen ist, bei dem wenigstens ein Teil der Paneele (24, 26, 28) als ein schallabsorbierendes Paneel (40; 140; 240; 79) nach einem der vorhergehenden Ansprüche ausgebildet ist.

## Claims

1. Aircraft cabin panel (40; 140; 240; 79) for sound reduction in an interior space, which aircraft cabin panel in at least one region comprises a sandwich construction with:
- a core layer (50; 150; 250; 86);
- a first covering layer (52; 152; 252; 85); and
- a second covering layer (54; 154; 254; 84);
wherein the core layer (50; 150; 250; 86) comprises a sound-absorbing open-pore core material;
wherein the first covering layer and the second covering layer are connected in planar fashion to the core layer (50; 150; 250; 86);
wherein the first covering layer (52; 152; 252; 85) is arranged in the direction of the sound waves to be absorbed and wherein the second covering layer (54; 154; 254; 84) is arranged opposite the first covering layer (52; 152; 252; 85);
wherein the first covering layer (52; 152; 252; 85) is designed so as to be acoustically transparent;
**characterized in that** the core layer comprises an open-pore or open-cell foam material.

2. Aircraft cabin panel according to claim 1, in which for the purpose of sound absorption in the interior space a first region (55) comprises the sandwich construction, wherein the first covering layer (52; 152; 252) comprises a first space-enclosing surface (56; 156; 256).

3. Panel according to claim 2, in which the second covering layer (254) comprises a second space-enclosing surface (266).

4. Panel according to one of the preceding claims, in which the core layer (50; 150; 250; 86), which is connected in planar fashion to the first and the second covering layer and which comprises the sound-absorbing open-pore core material, extends across the entire panel, or in which edge regions are provided, and the core layer (50; 150; 250), which is connected in planar fashion to the first and the second covering layer and which comprises the sound-absorbing open-pore core material, extends between the edge regions.

5. Panel according to one of the preceding claims, in which the first covering layer (52; 152; 252) has multiple layers and has a first lattice prepreg (58, 158; 258) and has a first cover (60; 160; 260) that forms the first surface (56; 156; 256); and wherein the first lattice prepreg (58, 158; 258) is connected in a planar fashion to the core layer (50; 150; 250); and/or in which the second covering layer (254) has multiple layers and has a second lattice prepreg (262) and a second cover (264) that forms the second surface (266);

6. Panel according to one of the preceding claims, in which the second covering layer (154; 254) is designed so as to be acoustically transparent or acoustically insulating.

7. Panel according to one of the preceding claims, in which in each case the flow resistance of the acoustically transparent covering layers (52; 152, 154; 252, 254) does not exceed 1000 Ns/m³.

8. Panel according to one of the preceding claims, in which the second cover layer (154; 254) has multiple layers and has a second lattice prepreg (162; 262); and wherein the second lattice prepreg (162; 262) is connected in a planar fashion to the core layer (150; 250).

9. Panel according to claim 8, in which the second covering layer (154) comprises a thin water-impermeable foil (164) that has a weight per unit area of at most 100g/m².

10. Panel according to one of the preceding claims, in which for the purpose of reducing the sound input in the interior a second region (83) is provided that comprises the sandwich construction; wherein in the second region (83) the second covering layer (84) comprises a space-enclosing surface, and the first covering layer (85) forms a rear area of a cabin lining (24, 26).

11. Panel according to claim 10, in which the second region (83) is arranged in an edge region of the panel; and wherein the edge region comprises a multiple-shell construction and forms a hollow space (87) for guiding air of an air conditioning plant of an aircraft; wherein the first covering layer (85) of the second region (83) is arranged so as to face the hollow space (87).

12. Panel according to one of the claims 10 to 11, in which the hollow space (87) is longitudinally directed, with its longitudinal sides extending parallel to the edge region of the panel; wherein the hollow space (87) is partly open on a first longitudinal side (88), that faces the edge region, for removing air or supplying air.

13. Panel according to one of the claims 10 to 12, in which the hollow space (87) is delimited by a hollow-space wall (91) that comprises the sandwich construction, wherein in each case the first covering layer is arranged so as to face the hollow space (87).

14. Panel according to one of the claims 10 to 13, in which the first covering layer of the second region is (83) is arranged on the opposite side of the first covering layer of the first region (55).

15. Aircraft (10) comprising a fuselage construction and a cabin (16) that is arranged within the fuselage (12), which cabin (16), at least in some sections, is enclosed by an interior lining made from panels (24, 26, 28), in which aircraft (10) at least some of the panels (24, 26, 28) are designed as a sound-absorbing panel (40; 140; 240; 79) according to one of the preceding claims.

## Revendications

1. Panneau de cabine d'avion (40 ; 140 ; 240 ; 79) destiné à réduire le son dans un espace intérieur, lequel panneau présente une construction de type sandwich dans au moins une zone, comprenant :
- une couche de coeur (50 ; 150 ; 250 ; 86) ;
- une première couche de couverture (52 ; 152 ; 252 ; 85) ; et
- une seconde couche de couverture (54 ; 154 ; 254 ; 84) ;
la couche de coeur (50 ; 150 ; 250 ; 86) étant constituée d'un matériau de coeur à pores ouverts insonorisant ;
la première et la seconde couche de couverture étant assemblées en plan avec la couche de coeur (50; 150 ; 250 ; 86) ;
la première couche de couverture (52 ; 152 ; 252 ; 85) étant disposée en direction des ondes sonores à absorber et la seconde couche de couverture (54 ; 154 ; 254 ; 84) étant disposée en vis-à-vis de la première couche de couverture (52 ; 152 ; 252 ; 85) ;
la première couche de couverture (52 ; 152 ; 252 ; 85) étant réalisée en transparence acoustique ;
**caractérisé en ce que** la couche de coeur est constituée d'une mousse à pores ouverts ou à cellules ouvertes.

2. Panneau de cabine d'avion selon la revendication 1, dans lequel, pour l'insonorisation dans l'espace intérieur, une première zone (55) présente la construction de type sandwich, la première couche de couverture (52 ; 152 ; 252) présentant une première surface (56 ; 156 ; 256) limitant l'espace.

3. Panneau selon la revendication 2, dans lequel la seconde couche de couverture (254) présente une seconde surface (266) limitant l'espace.

4. Panneau selon l'une des revendications précédentes, dans lequel la couche de coeur (50 ; 150 ; 250 ; 86) en matériau de coeur à pores ouverts insonorisant, assemblée en plan avec la première et la seconde couche de couverture, s'étend sur la totalité du panneau, ou dans lequel sont prévues des zones de bordure et la couche de coeur (50 ; 150 ; 250) en matériau de coeur à pores ouverts insonorisant, assemblée en plan avec la première et la seconde couche de couverture, s'étend entre les zones de bordure.

5. Panneau selon l'une des revendications précédentes, dans lequel la première couche de couverture (52 ; 152 ; 252) a une réalisation multicouche et présente un premier préimprégné réticulaire (58 ; 158 ; 258) et un premier recouvrement (60 ; 160 ; 260) formant la première surface (56 ; 156 ; 256) ; et le premier préimprégné réticulaire (58 ; 158 ; 258) étant assemblé en plan avec la couche de coeur (50 ; 150 ; 250) ; et ou dans lequel la seconde couche de couverture (254) a une réalisation multicouche et présente un second préimprégné réticulaire (262) et un second recouvrement (264) formant la seconde surface (266).

6. Panneau selon l'une des revendications précédentes, dans lequel la seconde couche de couverture (154 ; 254) est réalisée en transparence acoustique ou en isolation acoustique.

7. Panneau selon l'une des revendications précédentes, dans lequel l'impédance acoustique de chaque couche de couverture à transparence acoustique (52 ; 152, 154 ; 252, 254) n'est pas supérieure à 1000 Ns/m3.

8. Panneau selon l'une des revendications précédentes, dans lequel la seconde couche de couverture (154 ; 254) a une réalisation multicouche et présente un second préimprégné réticulaire (162 ; 262) ; et le second préimprégné réticulaire (162 ; 262) étant assemblé en plan avec la couche de coeur (150 ; 250).

9. Panneau selon la revendication 8, dans lequel la seconde couche de couverture (154) comporte une mince feuille imperméable à l'eau (164), qui présente une masse par unité de surface de 100 g/m² au maximum.

10. Panneau selon l'une des revendications précédentes, dans lequel il est prévu, pour réduire l'émission sonore dans l'espace intérieur, une seconde zone (83) qui présente la construction de type sandwich ; la seconde couche de couverture (84) présentant dans la seconde zone (83) une surface limitant l'espace et la première couche de couverture (85) formant une face arrière d'un habillage de cabine (24, 26).

11. Panneau selon la revendication 10, dans lequel la seconde zone (83) est disposée dans une zone de bordure du panneau ; et la zone de bordure ayant une réalisation multicoque et formant un espace creux (87) pour le guidage d'air d'une installation de ventilation d'un avion ; la première couche de couverture (85) de la seconde zone (83) étant tournée vers l'espace creux (87).

12. Panneau selon l'une des revendications 10 à 11, dans lequel l'espace creux (87) a une orientation longitudinale et s'étend par ses côtés longitudinaux parallèlement à la zone de bordure du panneau ; l'espace creux (87) étant en partie ouvert sur un premier côté longitudinal (88), orienté en direction de la zone de bordure, pour l'évacuation ou l'arrivée d'air.

13. Panneau selon l'une des revendications 10 à 12, dans lequel l'espace creux (87) est délimité par une paroi d'espace creux (91), qui présente la construction de type sandwich, la première couche de couverture étant respectivement tournée vers l'espace creux (87).

14. Panneau selon l'une des revendications 10 à 13, dans lequel la première couche de couverture de la seconde zone (83) est disposée sur le côté opposé de la première couche de couverture de la première zone (55).

15. Avion (10) avec une construction de fuselage et une cabine (16), réalisée à l'intérieur du fuselage (12) et entourée au moins en partie d'un habillage d'espace intérieur formé par l'un des panneaux (24, 26, 28), avion dans lequel au moins une partie des panneaux (24, 26, 28) est réalisée sous forme d'un panneau insonorisant (40 ; 140 ; 240 ; 79) selon l'une des revendications précédentes.
